# EUROPEAN PATENT APPLICATION

(11) **EP 4 447 216 A1**
(43) Date of publication of application: **16.10.2024**
(21) Application number: 22903950.8
(22) Date of filing: 09.11.2022
(51) Int. Cl.: H01M 50/271, H01M 50/204, H01M 50/209, H01M 50/224

(54) **BATTERY PACK**

(30) Priority: 07.12.2021 JP 2021198626
(71) Applicant: Panasonic Energy Co., Ltd., Osaka 570-8511 (JP)
(72) Inventor: KOHARA, Hikaru, Kadoma-shi, Osaka 571-0057 (JP)
(74) Representative: Novagraaf International SA
(86) International application number: PCT/JP2022/041634
(87) International publication number: WO 2023/106019

(57) **Abstract**

A battery pack according to an aspect of the present disclosure includes a battery module and an external case accommodating the battery module therein. The external case includes: a case body having a tubular shape having an opening; and a lid part closing the opening of the case body. The lid part includes: an inner lid connected to the opening of the case body; and an outer lid fixed to the inner lid and closing the opening of the case body. The inner lid is connected to an inner surface of the case body at the opening of the case body. The outer lid is fixed to an outer surface of the inner lid.

## Description

### TECHNICAL FIELD

The present disclosure relates to a battery pack including a battery module accommodated in an exterior case having a tubular shape.

### BACKGROUND ART

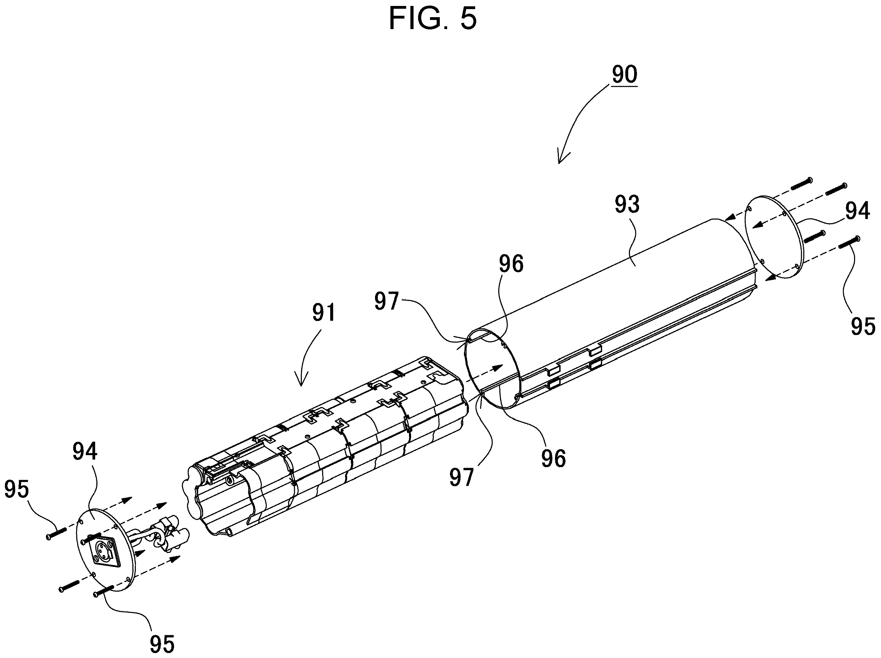

FIG. 5 is an exploded perspective view of a conventional battery pack. An exterior case including a tubular case body is advantageously mass-produced while the case body has a sufficient strength. The battery module is accommodated in the case body, and a lid is fixed to an opening of the case body (PTL 1).

### CITATION LIST

### Patent Literature

PTL 1: Japanese Patent Laid-Open Publication No. 2011-134540

### SUMMARY OF THE INVENTION

The battery pack including a tubular case body closed at each of both end openings with a lid part is required, as shown in FIG. 5, to include fixing protrusion ridges 96 having threaded holes 97 into which locking screws 95 penetrating lid parts 94 are screwed to fix lid parts 94 to case body 93. Since case body 93 shown in FIG. 5 includes fixing protrusion ridges 96 protruded on its inner surface, fixing protrusion ridges 96 restrict the inner volume of the battery pack. Battery pack 90 having the inner volume restricted by fixing protrusion ridges 96 is required to increase the outer shape of case body 93 so as to allow battery module 91 having a specific outer shape to be accommodated in case body 93. As a result, the volumetric energy density is reduced. The fixing protrusion ridges may protrude on the outer surface of the case body so as to prevent the fixing protrusion ridges from restricting the inner volume of the battery pack. In this configuration, however, the fixing protrusion ridges enlarge the outer shape of the battery pack, so that the volumetric energy density may be reduced.

A battery pack according to the present disclosure may solve the above-described disadvantage of the conventional battery pack. An object of the present disclosure is to provide a battery pack including a case body with a tubular shape so as to allow the case body to be efficiently mass-produced and to allow an opening of the case body to be closed without fixing protrusion ridges on an inner or outer surface of the case body so that a high volumetric energy density, which is an important characteristic required for the battery pack, is obtained.

A battery pack in accordance with an aspect of the present disclosure includes a battery module and an external case accommodating the battery module therein. The external case includes: a case body having a tubular shape having an opening; and a lid part closing the opening of the case body. The lid part includes: an inner lid connected to the opening of the case body; and an outer lid fixed to the inner lid and closing the opening of the case body. The inner lid is connected to an inner surface of the case body at the opening of the case body. The outer lid is fixed to an outer surface of the inner lid.

In the above-described battery pack, the lid part for closing the opening of the case body with a tubular shape includes the inner lid that connected to the inner surface of the case body and the outer lid fixed to the inner lid so that the opening of the case body may be closed by the outer lid. The battery pack does not require fixing protrusion ridges, which are required in the conventional battery pack to fix the lid part, on the inner surface or the outer peripheral surface at the opening of the case body. Therefore, while the case body has a tubular shape which may be efficiently mass-produced, it is possible to obtain a high volumetric energy density, which is an important characteristic for the battery pack.

A battery pack in accordance with another aspect of the present disclosure may further include a gasket sandwiched between the outer lid and the opening of the case body to provide the external case with a waterproof structure to seal the opening of the case body. The inner lid may be connected to the opening of the case body with a non-waterproof structure. The outer lid may have a shape closing the opening of the case body. The gasket may be pressed on the case body by the outer lid to provide the external case with the waterproof structure to seal the opening of the case body.

In the above-described battery pack, the inner lid is connected to the opening of the case body with a non-waterproof structure, the outer lid is fixed to the outer surface of the inner lid, and the outer lid presses the gasket on the case body to provide the waterproof structure with the gasket and outer lid to seal the opening of the case body. Accordingly, this battery pack does not require fixing ridges that are provided in the conventional battery pack for fixing the lid to the opening of the case body to constitute a watertight structure. Therefore, the external case has a waterproof structure to seal the opening of the case body with a compact external shape.

In a battery pack in accordance with still another aspect of the present disclosure, the gasket is sandwiched between respective surfaces of the outer lid and an opening edge of the case body which face each other.

In the above-described battery pack, the outer lid is fixed to the inner lid so that the gasket is pressed on the case body by the outer lid. Accordingly, the outer lid may not be necessarily connected to the case body through the gasket in a secure waterproof structure.

In a battery pack in accordance with still another aspect of the present disclosure, the inner lid may be connected to the case body with an engaging structure in which the inner lid is inserted into the inner surface of the case body to be engaged with the inner surface of the case body.

In the above-described battery pack, the inner lid is inserted into the inner surface of the case body and connected to the case body by an engaging structure. Accordingly, the inner lid may be connected to the case body by a simple structure. Further, the connection by the engaging structure allows the inner lid to be connected to a predetermined position on the case body accurately without any misalignment.

In a battery pack in accordance with still another aspect of the present disclosure, the case body may have a plurality of engaging recesses in the inner surface of the case body at the opening of the case body. The inner lid may include a plurality of engaging projections projecting from an outer periphery of the inner lid configured to be guided into the engaging recesses, respectively. The plurality of engaging projections may be guided into the plurality of engaging recesses to connect the inner lid to a predetermined position on the case body.

In the above-described battery pack, the engaging recesses are provided in the inner surface of the case body, the engaging projections configured to be guided to the engaging recesses are provided on the outer periphery of the outer lid, and the engaging projections are guided to the engaging recesses to connect the inner lid to a predetermined position on the case body. Accordingly, the inner lid may be connected to the predetermined position on the case body by a simple step of inserting the inner lid into the inside of the case body.

In a battery pack in accordance with still another aspect of the present disclosure, the inner lid may include a peripheral wall inserted into the inner surface of the case body from the opening. The plurality of engaging projections may be disposed on an outer surface of the peripheral wall. The plurality of engaging projections may be guided to the plurality engaging recesses, respectively, to connect the inner lid to the inner surface of the case body.

In the above-described battery pack, the inner lid includes the peripheral wall, and the engaging projections project from the outer surface of the peripheral wall. Accordingly, the peripheral wall may slide on the inner surface of the case body to move the inner lid from the opening to the inside of the case body while keeping the inner lid in a position parallel to the opening of the case body. Therefore, the engaging projections provided on the peripheral wall of the inner lid all together may be guided to the engaging recesses provided in the inner surface of the case body to easily connect the inner lid to the case body by an engaging structure.

In a battery pack in accordance with still another aspect of the present disclosure, the peripheral wall may be made of an elastically deformable plate. The peripheral wall may elastically deform to fit the engaging projections to the engaging recesses.

In the above-described battery pack, the peripheral wall on which the plurality of engaging projections are provided elastically deforms. Accordingly, the engaging projections may slide smoothly along the inner surface of the case body to guide the engaging projections to the engaging recesses, so that the inner lid can be connected to a predetermined position on the case body by an engaging structure.

In a battery pack in accordance with still another aspect of the present disclosure, the inner lid may be welded or adhered to the case body to be connected to the case body.

In the above-described battery pack, the inner lid is welded to the case body or adhered to the case body to connect the inner lid to the case body. Accordingly, the inner lid is securely connected to the case body in a wide area or in a long region.

In a battery pack in accordance with still another aspect of the present disclosure, the outer lid may be connected to the inner lid with a locking screw penetrating the outer lid with a waterproof structure and screwed into the inner lid.

In the above-described battery pack, the outer lid maybe easily connected to the inner lid, and to press the gasket on the case body in the step of fixing the outer lid to the inner lid, so that the outer lid, the gasket and the inner lid can be securely connected to the case body to provide the external case with a waterproof structure.

In a battery pack in accordance with still another aspect of the present disclosure, the outer lid may have a recess provided in an outer surface of the outer lid. A head of the locking screw may be disposed in the recess.

In the above-described battery pack, the outer lid has the recess therein and the screw head of the locking screw is disposed in the recess. Accordingly, the outer lid is fixed to the inner lid while preventing the locking screw from projecting from the outer surface of the outer lid or while reducing a projecting amount of the locking screw from the outer surface of the outer lid.

In a battery pack in accordance with still another aspect of the present disclosure, the case body may be made of aluminum and have a tubular shape.

In the above-described battery pack, the case body may be efficiently mass-produced by a drawing process or an extrusion process.

### BRIEF DESCRIPTION OF DRAWINGS

FIG. 1 is a perspective view of a battery pack according to an exemplary embodiment of the present disclosure.
FIG. 2 is an exploded perspective view of the battery pack shown in FIG. 1.
FIG. 3 is an enlarged perspective view of the battery pack shown in FIG. 2 for showing an external case.
FIG. 4 is an enlarged cross-sectional view of the battery pack shown in FIG. 1.
FIG. 5 is an exploded perspective view of a conventional battery pack.

### DESCRIPTION OF EMBODIMENTS

Hereinafter, the present disclosure will be described in detail with reference to the drawings. Although, in the following description, terms indicating particular directions or positions (e.g., "top," "bottom," and other terms each containing either of these terms) will be used as needed, such terms will be used to help the disclosure with reference to the drawings to be easily understood. Accordingly, it should not be construed that the technical scope of the present invention is limited by the meanings of those terms. Also, the parts appearing in two or more drawings with like reference marks will indicate like or similar parts or members.

Further, the exemplary embodiments described hereinafter show concrete examples of the technical idea of the present invention, and are not intended to limit the present invention to the following embodiments. Also, dimensions, materials, shapes, and relative arrangements of the components described hereinafter are not intended to limit the scope of the present invention to those components, unless otherwise specifically described so, but intended to show as examples. Also, contents described in one exemplary embodiment or one working example are applicable to other exemplary embodiments or other working examples. Also, sizes or positional relations of the members shown in the drawings may be sometimes exaggerated to clarify the explanation.

### Exemplary Embodiment 1

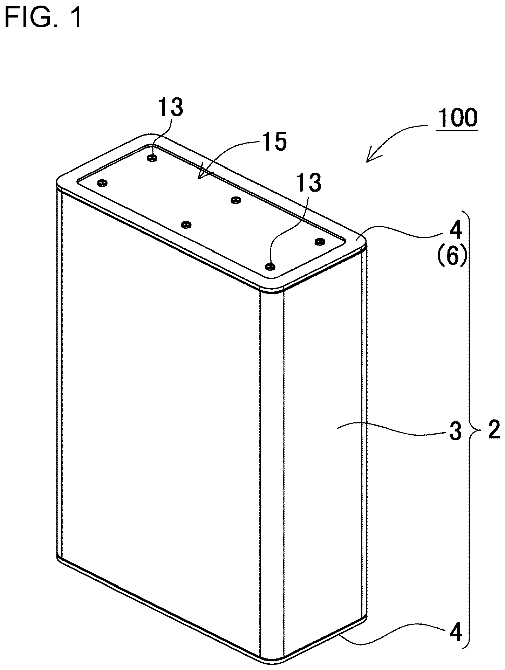

Battery pack 100 shown in FIGS. 1-4 includes battery module 1 accommodated in external case 2. Battery module 1 includes a battery block including battery cells connected in series or parallel or series-parallel to one another, and a circuit board connected to the battery block. In the battery block, in order to have a desired charge/discharge capacity, the battery cells are connected in series or parallel or series-parallel to one another, and each the battery cells are disposed at predetermined positions by a battery holder. A protective circuit is mounted on the circuit board. The protective circuit is connected to the battery block to control charging and discharging operations the battery block. Each battery cell may be a secondary battery, such as a lithium ion battery. Battery module 1 including the lithium ion secondary batteries as the battery cells provide a large charge/discharge capacity compared to its volume and weight. However, the battery cells of the battery block may not necessarily be the lithium ion secondary batteries, and may be any of the secondary batteries that are currently available or that would be developed in future such, for example, as the all-solid-state batteries.

### External Case 2

External case 2 includes case body 3 with a tubular shape and lid parts 4 that close openings 3A of case body 3, respectively. Each lid part 4 includes inner lid 5 connected to opening 3A of case body 3, and outer lid 6 fixed to outer surface 5A of inner lid 5 and closing opening 3A of case body 3. Inner lid 5 is connected to an inner surface of case body 3 at opening 3A. Outer lid 6 is fixed to outer surface 5A of inner lid 5 and closes opening 3A of case body 3. External case 2 shown in FIGS. 1-4 further includes gasket 7 sandwiched between outer lid 6 and case body 3 so that lid part 4 may be connected to opening 3A of case body 3 so as to provide external case 2 with a waterproof structure. External case 2 having the waterproof structure prevents various harmful effects caused by water infiltrated into the inside of case body 3 such, for example, as the leakage current or the short-circuit current due to reduction of the insulating resistance, to thereby secure a higher safety.

### Case Body 3

Case body 3 may be produced by forming a plastic or preferably a metal into a tubular shape by a drawing process or an extrusion process. Case body 3 with a tubular shape may be efficiently mass-produced by forming a metal or a plastic into a long tube and cutting the long tube to pieces having predetermined lengths. Case body 3 formed by the drawing process or the extrusion process may have a uniform cross-sectional shape so as to be configured to smoothly slide and insert the later-described inner lid 5 into the inner surface of case body 3 at opening 3A. Case body 3 made of a metal may be produced by processing preferably an aluminum or an aluminum alloy by a drawing process or an extrusion process. Case body 3 made of a metal has an excellent impact strength, as well as a desirable thermal conductivity to allow the heat generated by heat generating components disposed inside the battery pack to be efficiently radiated to the outside. However, the present disclosure is not intended to limit the metal of case body 3 to aluminum. Case body 3 may be made of a metal other than aluminum. For example, case body 3 may be made of a light-weight metal, such as magnesium, with a small weight so that a high gravimetric energy density may be obtained while having an excellent impact strength. Case body 3 may be made of a plastic. In this case, reinforcing fibers such as glass fibers or carbon fibers, may be buried to produce a tough case body 3.

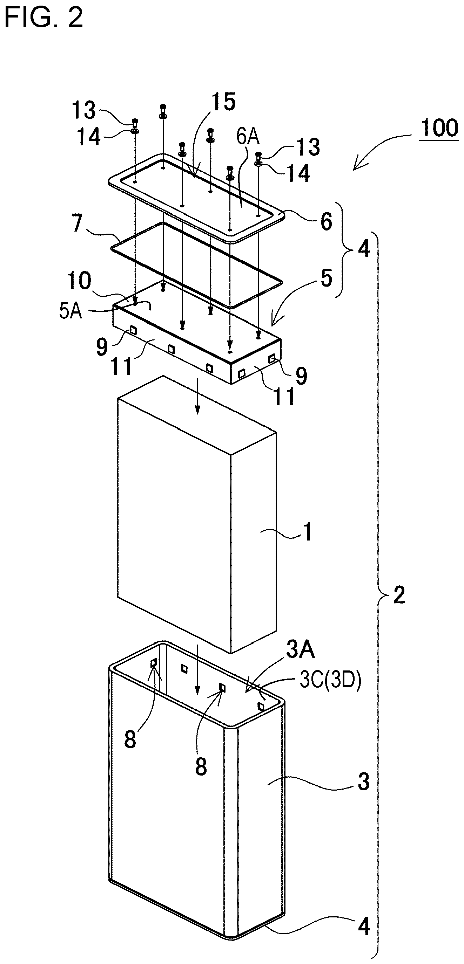

Case body 3 shown in FIGS. 2-4 has engaging recesses 8 formed in the inner surface at opening 3A for connecting inner lid 5 at a predetermined position in case body 3 by an engaging structure. Engaging recesses 8 are configured to guide engaging projections 9 provided on the outer surface of inner lid 5 so that engaging projections 9 are fitted to engaging recesses 8 to connect inner lid 5 to case body 3 without a misalignment. The fitting structure of engaging recesses 8 and engaging projections 9 may be realized as a shape that allows engaging projections 9 to be guided to engaging recesses 8 without any gaps. The fitting structure for guiding engaging projections 9 to engaging recesses 8 may be realized by making a gap between each of engaging recesses 8 and a corresponding one of engaging projections 9 to be, for example, 0.2 mm or smaller, and preferably 0.1 mm or smaller. To guide engaging projections 9 smoothly, each of engaging recesses 8 may be formed to have a chamfered opening edge or may be formed in such a tapered shape that the opening area increases as becoming closer to opening 3A.

Engaging recesses 8 are formed in the inner surface at opening 3A of case body 3 without passing through case body 3. Engaging recesses 8 may be formed by, for example, pressing inner surface 3C (inner surface 3D) of case body 3 with a tubular shape. In this press-working method, a press mold having projections for forming engaging recesses 8 is inserted into the inside of case body 3 so that both ends of the press mold are projected from both openings 3A of case body 3, and the projected portions are pressed by a press mechanism to form engaging recess 8. However, the present disclosure is not intended to limit the method for forming engaging recesses 8 in the inner surface of case body 3. Any of all other methods that can form engaging recesses 8 on the inner surface of case body 3 may be used.

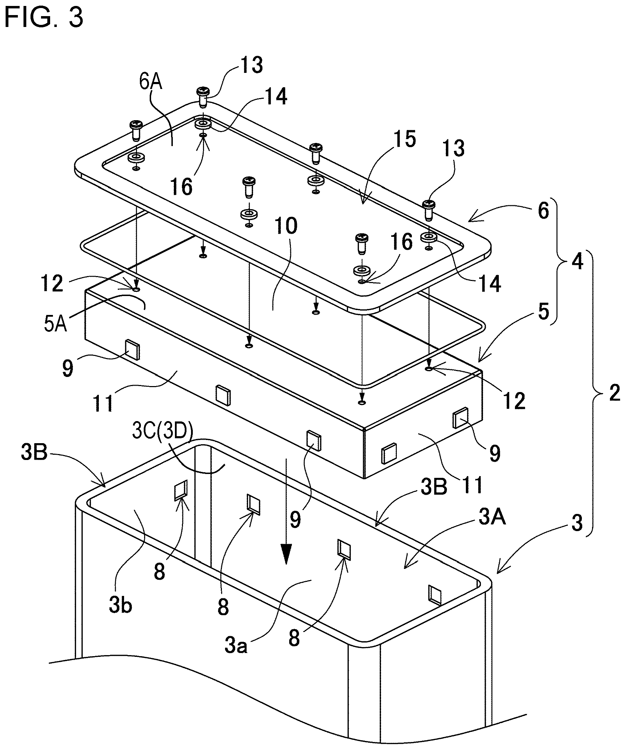

In case body 3 having a rectangular tubular shape, engaging recesses 8 are provided in respective inner surfaces of side walls forming the rectangular tubular shape to stably and securely connect inner lid 5 to case body 3 by an engaging structure. In case body 3 shown in FIGS. 2-4, engaging recesses 8 are formed at respective opposite positions in the inner surfaces. Case body 3 has the rectangular tubular shape which has an inner surface including four inner surfaces perpendicular to adjacent two. Engaging recesses 8 are provided in four inner surfaces of the rectangular tubular shape of tubular case body 3, so that inner lid 5 may be connected to case body 3 more accurately without any misalignment, while keeping inner lid 5 be perpendicular to an axial direction of case body 3 (a horizontal position in the drawings). Case body 3 shown in FIG. 3 has engaging recesses 8 therein such that the number of engaging recesses 8 on each wider surface 3a corresponding to a longer side of the rectangular shape is larger than the number of engaging recesses 8 on each narrower surface 3b corresponding to a shorter side of the rectangular shape. Case body 3 having this structure allows inner lid 5 having a rectangular shape to be kept perpendicular to the axial direction of case body 3 (a horizontal position in the figure) and connected to a predetermined position in case body 3. The number of engaging recesses 8 formed in each inner surface may be increased to allow inner lid 5 to be kept be perpendicular to the axial direction of case body 3 and firmly connected to a predetermined position in case body 3. On the other hand, the number of engaging recesses 8 may be decreased to efficiently perform the step of connecting inner lid 5 and case body 3. Accordingly, the number of engaging recesses 8 may be determined optimally considering the size and bending strength of inner lid 5.

Although case body 3 shown in FIGS. 1-3 has the rectangular tubular shape, the tube shape of case body 3 may not be limited to be a rectangular in the lateral cross-sectional shape. The lateral cross-sectional shape of tubular case body 3 may be an ellipse, a circle or a polygon with rounded corners. Case body 3 having any of these shapes may have engaging recesses 8 therein arranged at predetermined intervals to allow inner lid 5 to be kept be perpendicular to the axial direction of case body 3 and connected to a predetermined position in case body 3.

### Inner Lid 5

Inner lid 5 is connected to the inner surface of case body 3 at opening 3A. Inner lid 5 shown in FIGS. 2-4 is connected to case body 3 by an engaging structure. Inner lid 5 connected to case body 3 by an engaging structure may be inserted into the inner surface of case body 3 at opening 3A to be simply and easily connected to a predetermined position in case body 3 without any misalignment.

Inner lid 5 connected to case body 3 by an engaging structure includes engaging projections 9 projecting from the outer periphery of inner lid 5 to configured to be guided to engaging recesses 8 in the inner surface of case body 3. Since engaging projections 9 are guided to engaging recesses 8 to connect inner lid 5 to a predetermined position in case body 3, each engaging projection 9 may preferably have, as described before, an outer shape configured to be guided to engaging recesses 8 by the engaging structure.

In external case 2 having a waterproof structure, the waterproof structure is not realized by inner lid 5 and case body 3, but is realized by gasket 7 between outer lid 6 and case body 3. Since inner lid 5 may not necessarily be connected to case body 3 with a waterproof structure, inner lid 5 may not be configured to have a waterproof structure, and can be simply engaged to the inner surface of case body 3 with a non-waterproof structure. Inner lid 5 is configured to fix outer lid 6 to opening 3A of case body 3, and is not required to have a function of closing opening 3A of case body 3 by itself. Accordingly, inner lid 5 may be easily connected to case body 3 by an engaging structure. However, the connecting structure may not be limited to the engaging structure. Any other structure that can connect inner lid 5 to case body 3 may be used. For example, inner lid 5 may be adhered to case body 3. As another method, the outer periphery of inner lid 5 may be welded to the inner periphery of case body 3.

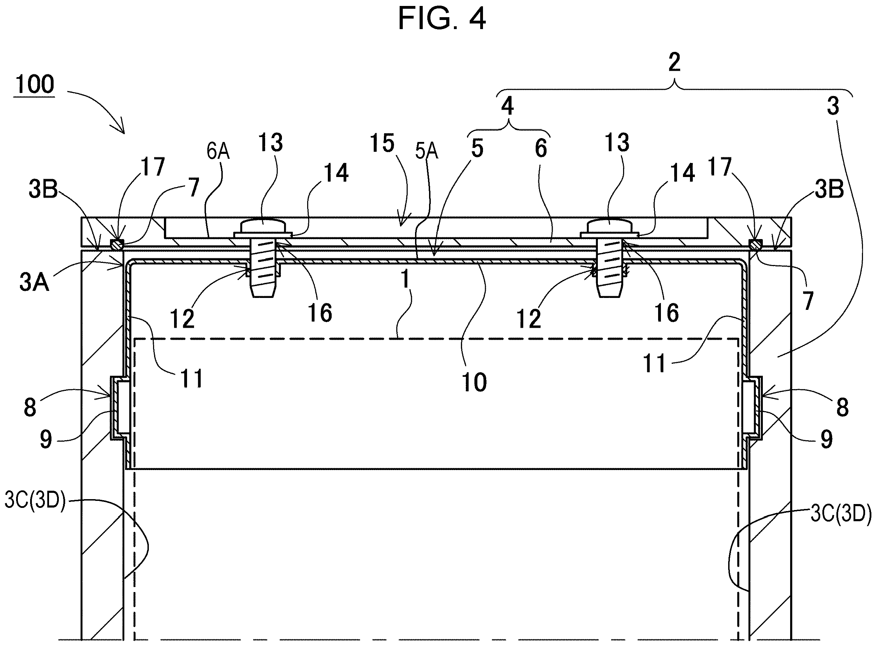

Inner lid 5 shown in FIGS. 3 and 4 is produced by pressing a metal plate into a box shape having body plate 10 and peripheral walls 11 formed at a peripheral portion of body plate 10 so as to be inserted into the inner surface of case body 3 at opening 3A. Engaging projections 9 are provided on outer surfaces of peripheral walls 11. Inner lid 5 having this structure may be produced by press-working a flat metal plate to form engaging projections 9, cutting the metal plate to pieces each having a predetermined outer shape, and bending the periphery of body plate 10 perpendicularly to form peripheral walls 11. In this shape, inner lids 5 each having accurate dimensions and shape may be efficiently mass-produced by a pressing step, a cutting step and a bending-working step. Further, inner lid 5 allows peripheral walls 11 to slide on inner surfaces 3C (inner surface 3D) of case body 3 so that inner lid 5 may move from opening 3A to the inside of case body 3 while keeping a position parallel to opening 3A of case body 3 to guide engaging projections 9 to engaging recesses 8. Accordingly, engaging projections 9 provided on peripheral walls 11 of inner lid 5 may be guided altogether to respective engaging recesses 8 provided in inner surface 3D of case body 3, so that inner lid 5 can be disposed at a predetermined position in case body 3. Further, since the inside space surrounded by peripheral walls 11 becomes a part of a space for accommodating battery module 1 therein, the heights of peripheral walls 11 may be high (the vertical width in the figure may be increased) without narrowing the space for accommodating battery module 1 therein, so that inner lid 5 may move along inner surface 3D, while keeping the horizontal position, to be connected to case body 3.

Further, In the above-described inner lid 5, each of the metal plates constituting peripheral walls 11 may have an elastically deformable width of 2 mm or thinner so that peripheral walls 11 with engaging projections 9 can smoothly slide along inner surface 3D of case body 3 to guide engaging projections 9 to engaging recesses 8. In addition, engaging projections 9 having been guided to engaging recesses 8 can be held to be prevented from being released from engaging recesses 8 by the elastic restoring force of peripheral walls 11, so that inner lid 5 can be firmly connected to case body 3. In inner lid 5 having such elastically deformable peripheral walls 11, the pressure of engaging projections 9 pressing inner surface 3D of case body 3 is decreased due to the elastic deformation of peripheral walls 11. Engaging projections 9 decreased in the pressure of pressing inner surface 3D reduce the frictional resistance between each of engaging projections 9 and inner surface 3D of case body 3 since the frictional resistance increases in proportion to the pressing force. Engaging projections 9 reduced in the frictional resistance can smoothly slide along inner surface 3D to be quickly guided to engaging recesses 8. Further, since engaging projections 9 having been guided to engaging recesses 8 are held in engaging recesses 8 by the elastic restoring force, inner lid 5 can be disposed at a predetermined position in case body 3. In other words, inner lid 5 having the above-described structure can realize such ideal properties that inner lid 5 is smoothly connected to a predetermined position in case body 3 and that inner lid 5 in the connected state is kept at the predetermined position in case body 3 without being released from the connected state. This feature is important in a case where external case 2 is required to guide a lot of engaging projections 9 to engaging recesses 8 to securely connect a large inner lid 5 to case body 3. Since increase in the number of engaging projections 9 and engaging recesses 8 generally increase the total frictional resistance between engaging projections 9 and inner surface 3D of case body 3, which in turn causes difficulty in smooth connection of inner lid 5 to case body 3.

Inner lid 5 has threaded holes 12 into which locking screws 13 for fixing outer lid 6 are screwed. In inner lid 5 shown in FIGS. 3 and 4, threaded holes 12 are arranged in the periphery of body plate 10 so as to oppose to positions on outer lid 6 through which locking screws 13 penetrate outer lid 6. Each of threaded holes 12 has been processed by the burring method so that locking screw 13 screwed into each threaded hole 12 can be firmly fixed.

### Outer Lid 6

Outer lid 6 is fixed to outer surface 5A of inner lid 5 and closes opening 3A of case body 3. Outer lid 6 may be produced as a plate made of a plastic or a metal and having an outer shape that can closes opening 3A of case body 3. Outer lid 6 shown in FIGS. 1-4 has an outer periphery that is the same in shape as the outer periphery of case body 3 with the same shape, so that the outer periphery of outer lid 6 may be flush with the outer periphery of case body 3. Outer lid 6 can be fixed to inner lid 5 with locking screws 13 that pass through outer lid 6 with a waterproof structure. Each locking screw 13 is provided on a center of its screw head with a driving recess having a non-circular shape, such as a hexagonal shape, a star shape or an elliptic shape, and can be screwed into inner lid 5 by inserting a driver into the driving recess and rotating the driver. Each locking screw 13 passes through outer lid 6 while seal 14 with a ring shape is sandwiched between the screw head and the surface of outer lid 6, and is fixed to inner lid 5 by screwing the threaded portion of locking screw 13 into threaded hole 12 of inner lid 5. Locking screw 13 that does not connect outer lid 6 with a waterproof structure passes through outer lid 6 without using seal 14 and is screwed into inner lid 5.

Outer lid 6 shown in FIGS. 1-4 has recess 15 in outer surface 6A as a space for the screw heads of locking screws 13 to be disposed. In the illustrated outer lid 6, rectangular recess 15 is provided in an area excluding the outer peripheral portion. The depth of recess 15 is larger than the height of the screw head so that outer lid 6 can be fixed to inner lid 5 while the screw heads do not project from the outer surface of outer lid 6. Recess 15 has through-holes 16 therein through which locking screws 15 are inserted. Through-holes 16 are arranged along the outer periphery of recess 15 so that the outer periphery of outer lid 6 can be fixed to inner lid 5 with locking screws 13 inserted through penetrating holes 16 to allow the outer peripheral portion of outer lid 6 to tightly contact opening 3A of case body 3. Outer lid 6 having recess 15 in the area excluding the outer periphery may be fixed to inner lid 5 while the screw head of each locking screw 13 does not project from the outer surface of outer lid 6 or the amount of projection of the screw head is small. Further, the outer periphery of outer lid 6 may be thick to increase the bending strength so that the outer periphery of outer lid 6 can securely and tightly contact and be fixed to opening 3A of case body 3. Further, recess 15 advantageously reduces the weight of outer lid 6. Battery pack 100 including outer lid 6 with the reduced weight may have outer lid 6 made of a metal, such as aluminum. Outer lid 6 made of metal such as aluminum has an adequate strength, provides an excellent heat radiation property, and reduces the weight of external case 2, so that a high gravimetric energy density can be obtained. Outer lid 6 may not be made of a metal, but may be made of a plastic. Outer lid 6 made of a plastic may have recess 15 therein to reduce its weight so that a high gravimetric energy density can be obtained.

Outer lid 6 shown in FIG. 4 has guide groove 17 therein for guiding gasket 7, which is a member for outer lid 6 to be fixed to case body 3 with a waterproof structure, to a predetermined position. Guide groove 17 is provided in a surface of the outer lid facing opening end surface 3B of case body 3. The depth of guide groove 17 is smaller than the thickness or outer diameter of gasket 7 so that gasket 7 is compressed while outer lid 6 is fixed to inner lid 5 to tightly contact opening end surface 3B of case body 3.

### Gasket 7

Gasket 7 is made of a rubber-like elastic material, such as elastomer or rubber or a material with a ring shape that can be pressed to tightly contact outer lid 6 and opening end surface 3B of case body 3 to realize a waterproof structure. Gasket 7 is disposed in guide groove 17 and pressed by outer lid 6 on case body 3 to elastically deform. Gasket 7 may be an O-ring made of elastomer or a rubber or may be a sheet that can be pressed to tightly contact the opposing surfaces to provide external case 2 with a waterproof structure. In a state in which outer lid 6 is fixed to inner lid 5, gasket 7 tightly contact respective surfaces of outer lid 6 and case body 3 which face each other to provide external case 2 with the waterproof structure to seal external case 2.

External case 2 shown in FIG. 4 includes gasket 7 that is sandwiched between outer lid 6 and the opening edge of case body 3 to provide external case 2 with a waterproof structure to seal opening 3A of case body 3. In battery pack 100, inner lid 5 is connected to opening 3A of case body 3 with a non-waterproof structure, outer lid 6 has an outer shape that can close opening 3A of case body 3 or preferably has an outer shape nearly equal to the outer shape of case body 3, and gasket 7 is pressed by outer lid 6 on the opening edge of case body 3. Gasket 7 made of a rubber-like elastic material and pressed by outer lid 6 elastically deforms in the pressed direction to tightly contact the outer periphery of outer lid 6 and opening end surface 3B of case body 3, thereby providing external case 2 with the waterproof structure to seal opening 3A of case body 3.

### INDUSTRIAL APPLICABILITY

The present disclosure is favorably applicable as a battery pack that includes a battery module encased in a tubular external case and can obtain a high volumetric energy density.

### REFERENCE MARKS IN THE DRAWINGS

- 100: battery pack
- 1: battery module
- 2: external case
- 3: case body
- 3A: opening
- 3B: opening end surface
- 3a: wider surface
- 3b: narrower surface
- 4: lid part
- 5: inner lid
- 6: outer lid
- 7: gasket
- 8: engaging recess
- 9: engaging projection
- 10: body plate
- 11: peripheral wall
- 12: threaded hole
- 13: locking screw
- 14: seal
- 15: recess
- 16: penetrating hole
- 17: guide groove
- 90: battery pack
- 91: battery module
- 93: case body
- 94: lid part
- 95: locking screw
- 96: fixing protruding ridge
- 97: threaded hole

## Claims

1. A battery pack comprising:
a battery module; and
an external case accommodating the battery module therein, wherein
the external case includes:
a case body having a tubular shape with an opening; and
a lid part closing the opening of the case body,
the lid part includes:
an inner lid connected to the opening of the case body; and
an outer lid fixed to the inner lid and closing the opening of the case body,
the inner lid is connected to an inner surface of the case body at the opening of the case body, and
the outer lid is fixed to an outer surface of the inner lid.

2. The battery pack according to claim 1, further comprising
a gasket sandwiched between the outer lid and the opening of the case body to provide the external case with a waterproof structure to seal the opening of the case body, wherein
the inner lid is connected to the opening of the case body with a non-waterproof structure,
the outer lid has a shape closing the opening of the case body, and
the gasket is pressed on the case body by the outer lid to provide the external case with the waterproof structure to seal the opening of the case body.

3. The battery pack according to claim 2, wherein the gasket is sandwiched between respective surfaces of the outer lid and an opening edge of the case body which face each other.

4. The battery pack according to any one of claims 1 to 3, wherein the inner lid is connected to the case body with an engaging structure in which the inner lid is inserted into the inner surface of the case body to be engaged with the inner surface of the case body.

5. The battery pack according to claim 4, wherein
the case body has a plurality of engaging recesses in the inner surface of the case body at the opening of the case body,
the inner lid includes a plurality of engaging projections projecting from an outer periphery of the inner lid configured to be guided into the engaging recesses, respectively, and
the plurality of engaging projections are guided into the plurality of engaging recesses to connect the inner lid to a predetermined position on the case body.

6. The battery pack according to claim 5, wherein
the inner lid includes a peripheral wall inserted into the inner surface of the case body from the opening,
the plurality of engaging projections are disposed on an outer surface of the peripheral wall, and
the plurality of engaging projections are guided to the plurality engaging recesses, respectively, to connect the inner lid to the inner surface of the case body.

7. The battery pack according to claim 6, wherein
the peripheral wall is made of an elastically deformable plate, and
the peripheral wall elastically deforms to fit the engaging projections to the engaging recesses.

8. The battery pack according to any one of claims 1 to 7, wherein the inner lid is welded or adhered to the case body to be connected to the case body.

9. The battery pack according to any one of claims 1 to 8, wherein the outer lid is connected to the inner lid with a locking screw penetrating the outer lid with a waterproof structure and screwed into the inner lid.

10. The battery pack according to claim 9, wherein
the outer lid has a recess provided in an outer surface of the outer lid, and
a head of the locking screw is disposed in the recess.

11. The battery pack according to any of claims 1 to 10, wherein the case body is made of aluminum and has a tubular shape.
